# EUROPEAN PATENT APPLICATION

(11) **EP 3 244 396 A1**
(43) Date of publication of application: **15.11.2017**
(21) Application number: 17170225.1
(22) Date of filing: 09.05.2017
(51) Int. Cl.: G09G 5/14, G06F 3/0488

(54) **SPLIT-SCREEN DISPLAY METHOD AND APPARATUS**

(30) Priority: 09.05.2016 CN 201610304861
(71) Applicant: Beijing Xiaomi Mobile Software Co., Ltd., Beijing 100085 (CN)
(72) Inventor: CHEN, Qiaozhuo, BEIJING, 100085 (CN); LU, Zhenzhou, BEIJING, 100085 (CN); ZHU, Yin, BEIJING, 100085 (CN)
(74) Representative: Delumeau, François Guy

(57) **Abstract**

The present invention provides a split-screen display method and a split-screen display apparatus, which relates to a field of electronic devices. The split-screen display method includes: receiving (101, 201) an operating signal for triggering a multi-task management interface to display; acquiring (102) applications running on the electronic device; and displaying (103) a first application on a main partition of the multi-task management interface and displaying at least one second application on a secondary partition of the multi-task management interface, in which the first application and the at least one second application are running on the electronic device.

## Description

### TECHNICAL FIELD

The present invention relates to the field of electronic devices, and more particularly, to a split-screen display method and a split-screen display apparatus.

### BACKGROUND

An electronic device configured with an intelligent operating system may support only one application running in foreground, which means that only one application in a running state may be displayed on a screen of the electronic device.

A user may only switch the application running in foreground repeatedly when two applications are needed at the same time. For example, the user may need to use application A running in foreground and application B running in background at the same time. The user needs to switch the application A to running in background and then to switch the application B to running in foreground when the application B is needed to be viewed; and the user needs to switch the application A to running in foreground again when the application A is needed to be viewed. Means for displaying the application on the electronic device provided in prior art are unsatisfactory.

### SUMMARY

The present invention provides a split-screen display method and a split-screen display apparatus. Technical solutions are described as follows.

According to a first aspect of embodiments of the present invention, a split-screen display method applied to an electronic device is provided, which comprises: receiving an operating signal for triggering a multi-task management interface to display; acquiring applications running on the electronic device; and displaying a first application on a main partition of the multi-task management interface and displaying at least one second application on a secondary partition of the multi-task management interface, in which the first application and the at least one second application are running on the electronic device. By splitting the multi-task management interface into the main partition and the secondary partition for exhibiting (or displaying) different applications, a user may be able to use at least two applications at the same time, which may solve a problem that means for displaying the application on the electronic device provided in prior art are unsatisfactory and may improve the user's experience as well.

In a particular embodiment, displaying a first application on a main partition of the multi-task management interface comprises: acquiring the last application running in foreground as the first application, and displaying the first application on the main partition of the multi-task management interface. By configuring the last application running in foreground as the first application and displaying the first application on the main partition, an operating procedure for acquiring the first application may be simplified and efficiency of split-screen display may be improved.

In a particular embodiment, displaying at least one second application on a secondary partition of the multi-task management interface comprises: displaying at least one previewing interface corresponding to at least one application other than the last application running in foreground on the secondary partition; and acquiring one of the at least one previewing interface displayed on the secondary partition selected as at least one second application, and displaying the at least one second application on the secondary partition of the multi-task management interface. By displaying respective previewing interfaces corresponding to the applications other than the last application running in foreground on the secondary partition for user's selection, the application corresponding to the previewing interface selected by the user may be displayed on the secondary partition.

In a particular embodiment, the split-screen display method also comprises: acquiring a third application displayed on the secondary partition and selected; receiving an exchange instruction for indicating to display the third application on the main partition; and moving the third application to the main partition to exhibit and moving the first application to a location the third application used to be in the secondary partition to exhibit, such that the user may choose the at least one second application from the secondary partition to exhibit in the main partition.

In a particular embodiment, the split-screen display method also comprises: displaying the applications running on the electronic device and a split-screen control option on the multi-task management interface; and switching from a displaying mode for the multi-task management interface to a split-screen mode if the split-screen control option is triggered, in which the multi-task management interface in the split-screen mode includes the main partition and the secondary partition.

In a particular embodiment, the multi-task management interface in the split-screen mode is set with a segment control line which is movable and is configured to split the multi-task management interface into the main partition and the secondary partition, such that the user may adjust sizes of the main partition and the secondary partition by moving the segment control line.

In a particular embodiment, the main partition or the secondary partition comprises a multifunctional virtual button for introducing to display at least one of a split-screen exit control option, an exchange control option and a group of switching control options, and the split-screen display method includes: controlling the multi-task management interface to exit the split-screen mode if the split-screen exit control option is triggered; and controlling to exchange the application displayed on the main partition with the application displayed on the secondary partition if the exchange control option is triggered. The group of switching control options comprises a first switching control option for switching the application displayed on the main partition and a second switching control option for switching the application displayed on the secondary partition, the split-screen display method includes: displaying the application running on the electronic device other than the first application on the main partition if the first switching control option is triggered; and displaying the application running on the electronic device other than the at least one second application on the secondary partition if the second switching control option is triggered. By providing the split-screen exit control option, the user may be able to control the multi-task management interface to exit the split-screen mode by triggering the split-screen exit control option; and by providing the exchange control option and the group of switching control options, the user may be able to switch the application displayed on the secondary partition and the application displayed on the main partition by using the exchange control option and the group of switching control options.

According to a second aspect of embodiments of the present invention, a split-screen display apparatus applied to an electronic device is provided, which comprises: a first receiving module, configured to receive an operating signal for triggering a multi-task management interface to display; a first acquiring module, configured to acquire applications running on the electronic device; and a first displaying module, configured to display a first application on a main partition of the multi-task management interface and to display at least one second application on a secondary partition of the multi-task management interface, in which the first application and the at least one second application are running on the electronic device.

In a particular embodiment,, the first displaying module comprises: an acquiring sub-module, configured to acquire the last application running in foreground as the first application, and to display the first application on the main partition of the multi-task management interface.

In a particular embodiment, the first displaying module further comprises: a first displaying sub-module, configured to display at least one previewing interface corresponding to at least one application other than the last application running in foreground on the secondary partition; and a second displaying sub-module, configured to acquire a selected previewing interface of the at least one previewing interface displayed on the secondary partition, and to configure an application corresponding to the selected previewing interface as at least one second application, and to display the at least one second application on the secondary partition of the multi-task management interface.

In a particular embodiment, the split-screen display apparatus further comprises: a second acquiring module, configured to acquire a third application displayed on the secondary partition and selected; a second receiving module, configured to receive an exchange instruction for indicating to display the third application on the main partition; and an exhibiting module, configured to move the third application to the main partition to exhibit and to move the first application to a location the third application used to be in the secondary partition to exhibit.

In a particular embodiment, the split-screen display apparatus further comprises: a second displaying module, configured to display the applications running on the electronic device and a split-screen control option on the multi-task management interface; and a switching module, configured to switch from a displaying mode for the multi-task management interface to a split-screen mode if the split-screen control option is triggered, in which the multi-task management interface in the split-screen mode includes the main partition and the secondary partition.

In a particular embodiment, the multi-task management interface in the split-screen mode is set with a segment control line which is movable and is configured to split the multi-task management interface into the main partition and the secondary partition.

In a particular embodiment, the main partition or the secondary partition comprises a multifunctional virtual button for introducing to display at least one of a split-screen exit control option, an exchange control option and a group of switching control options, and the split-screen display apparatus includes a first control module, configured to control the multi-task management interface to exit the split-screen mode if the split-screen exit control option is triggered; and a second control module, configured to control to exchange the application displayed on the main partition with the application displayed on the secondary partition if the exchange control option is triggered. The group of switching control options includes a first switching control option for switching the application displayed on the main partition and a second switching control option for switching the application displayed on the secondary partition, the split-screen display apparatus includes: a third control module, configured to control the application running on the electronic device other than the first application to display on the main partition if the first switching control option is triggered; and a fourth control module, configured to control the application running on the electronic device other than the at least one second application to display on the secondary partition if the second switching control option is triggered.

According to a third aspect of embodiments of the present invention, a split-screen display device applied to an electronic device is provided, which comprises: a processor; and a memory configured to store an instruction executable by the processor, in which the processor is configured to: receive an operating signal for triggering a multi-task management interface to display; acquire applications running on the electronic device; and display a first application on a main partition of the multi-task management interface and display at least one second application on a secondary partition of the multi-task management interface, in which the first application and the at least one second application are running on the electronic device.

The advantages and features of the devices according to the embodiments of the present invention are the same with those of the above described method and will not be repeated here.

In one particular embodiment, the steps of the split-screen display method are determined by computer program instructions.

Consequently, according to a fourth aspect, the invention is also directed to a computer program for executing the steps of a split-screen display method as described above when this program is executed by a computer.

This program can use any programming language and take the form of source code, object code or a code intermediate between source code and object code, such as a partially compiled form, or any other desirable form.

The invention is also directed to a computer-readable information medium containing instructions of a computer program as described above.

The information medium can be any entity or device capable of storing the program. For example, the support can include storage means such as a ROM, for example a CD ROM or a microelectronic circuit ROM, or magnetic storage means, for example a diskette (floppy disk) or a hard disk.

Alternatively, the information medium can be an integrated circuit in which the program is incorporated, the circuit being adapted to execute the method in question or to be used in its execution.

It is to be understood that both the foregoing general description and the following detailed description are exemplary and explanatory only and are not restrictive of the present invention.

### BRIEF DESCRIPTION OF THE DRAWINGS

Accompanying drawings herein are incorporated in and constitute a part of the specification, and illustrate example embodiments in line with the present invention, and serve to explain the principle of the present invention together with the description.
Fig. 1 is a flow chart illustrating a split-screen display method according to an example embodiment of the present invention;
Fig. 2A is a flow chart illustrating a split-screen display method according to another example embodiment of the present invention;
Fig. 2B is a schematic diagram illustrating a display of a triggered multi-task management interface according to an example embodiment of the present invention;
Fig. 2C is a schematic diagram illustrating a multi-task management interface according to an example embodiment of the present invention;
Fig. 2D is a schematic diagram illustrating a multi-task management interface including a main partition and a secondary partition according to an example embodiment of the present invention;
Fig. 2E is a schematic diagram illustrating a multi-task management interface in a split-screen mode according to an example embodiment of the present invention;
Fig. 2F is a schematic diagram illustrating a sceniario of displaying an application corresponding to a previewing interface displayed on a secondary partition and selected on the secondary partition according to an example embodiment of the present invention;
Fig. 2G is a flow chart illustrating a method for displaying on a main partition a third application selected from a secondary partition instead of a first application according to an example embodiment of the present invention;
Fig. 2H is a schematic diagram illustrating a sceniario of displaying on a main partition a third application selected from a secondary partition instead of a first application according to an example embodiment of the present invention;
Fig. 2I is a schematic diagram illustrating a sceniario of displaying a multifunctional virtual button on a secondary partition according to an example embodiment of the present invention;
Fig. 3 is a block diagram illustrating a split-screen display apparatus according to an example embodiment of the present invention;
Fig. 4 is a block diagram illustrating a split-screen display apparatus according to another example embodiment of the present invention; and
Fig. 5 is a block diagram illustrating a split-screen display device according to an example embodiment of the present invention.

### DETAILED DESCRIPTION

Reference will now be made in detail to example embodiments, examples of which are illustrated in the accompanying drawings. The following description refers to the accompanying drawings in which the same numbers in different drawings represent the same or similar elements unless otherwise represented. The implementations set forth in the following description of example embodiments do not represent all implementations consistent with the invention. Instead, they are merely examples of apparatuses and methods consistent with aspects related to the invention as recited in the appended claims.

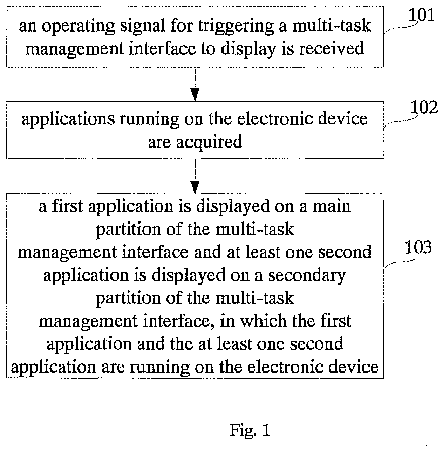

Fig. 1 is a flow chart illustrating a split-screen display method according to an example embodiment of the present invention. The split-screen display method is implemented by an electronic device including a touch screen and may include followings.

In step 101, an operating signal for triggering a multi-task management interface to display is received.

In step 102, applications running on the electronic device are acquired.

In step 103, a first application is displayed on a main partition of the multi-task management interface and at least one second application is displayed on a secondary partition of the multi-task management interface, in which the first application and the at least one second application are running on the electronic device. In this document, the main partition and the secondary partition of the multi-task management interface allow the application displayed thereon to be operated by a user.

In conclusion, according to the split-screen display method provided by embodiments of the present invention, by receiving the operating signal for triggering the multi-task management interface to display, displaying the first application on the main partition of the multi-task management interface and displaying the at least one second application on the secondary partition of the multi-task management interface, in which the first application and the at least one second application are running on the electronic device, i.e., by splitting the multi-task management interface into the main partition and the secondary partition for displaying different applications, a user may be able to use at least two applications at the same time, which may solve a problem that means for displaying the application on the electronic device provided in prior art are unsatisfactory and may improve the user's experience as well.

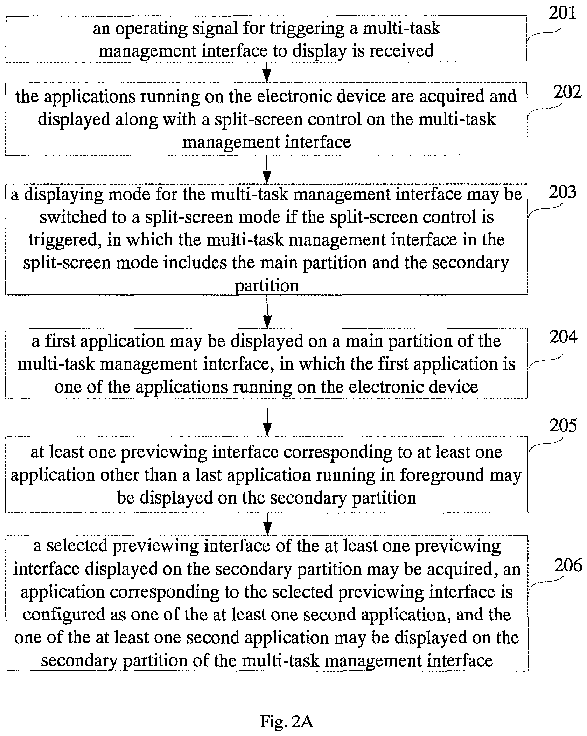

Fig. 2A is a flow chart illustrating a split-screen display method according to another example embodiment of the present invention. The split-screen display method is applied to an electronic device including a touch screen and may include followings.

In step 201, an operating signal for triggering a multi-task management interface to display is received.

The operating signal described herein may be generated when a certain physical button on an electronic device is triggered, or may be a gesture input by the user on the touch screen of the electronic device, or may be generated when the electronic device is shaken following a preset track. The operating signal may be not limited in the embodiments of the present invention and may be determined depending on actual situations.

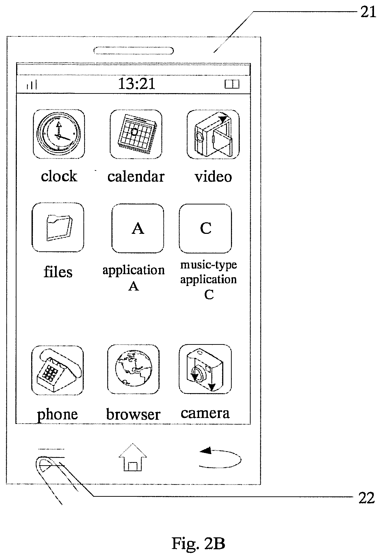

This embodiment takes a scenario in which a certain physical button on an electronic device is triggered to generate the operating signal as an example for illustrating. As shown in Fig. 2B, a multi-task button 22 is provided on the electronic device 21, in which the multi-task button 22 is configured to trigger the multi-task management interface to display. The electronic device may receive the operating signal for triggering the multi-task management interface to display when the user clicks the multi-task button 22.

Generally, the multi-task management interface is configured to display applications running on the electronic device, and each of the applications displayed on the multi-task management interface may be displayed in a form of a previewing interface corresponding to the application. The previewing interface described herein may be the last interface of the application displayed on a screen of the electronic device before the application stops running in foreground. Alternatively, the previewing interface of the application may be a main interface corresponding to the application.

In step 202, the applications running on the electronic device are acquired and displayed along with a split-screen control option (e.g. an icon or a soft button) on the multi-task management interface.

Each of the applications may be displayed in the form of the previewing interface corresponding to the application when the applications running on the electronic device are displayed on the multi-task management interface.

Specifically, various arrangement modes may be adopted when previewing interfaces corresponding respectively to the applications are displayed. For example, the previewing interfaces corresponding respectively to the applications may be arranged horizontally in a single row according to a first preset order. For another example, the previewing interfaces corresponding respectively to the applications may be arranged horizontally in double rows according to the first preset order. The first preset order described herein may be an order of opening the applications recently, or may be an order of use frequencies of the applications, which may be determined depending on actual situations and may be not limited in the embodiments of the present invention.

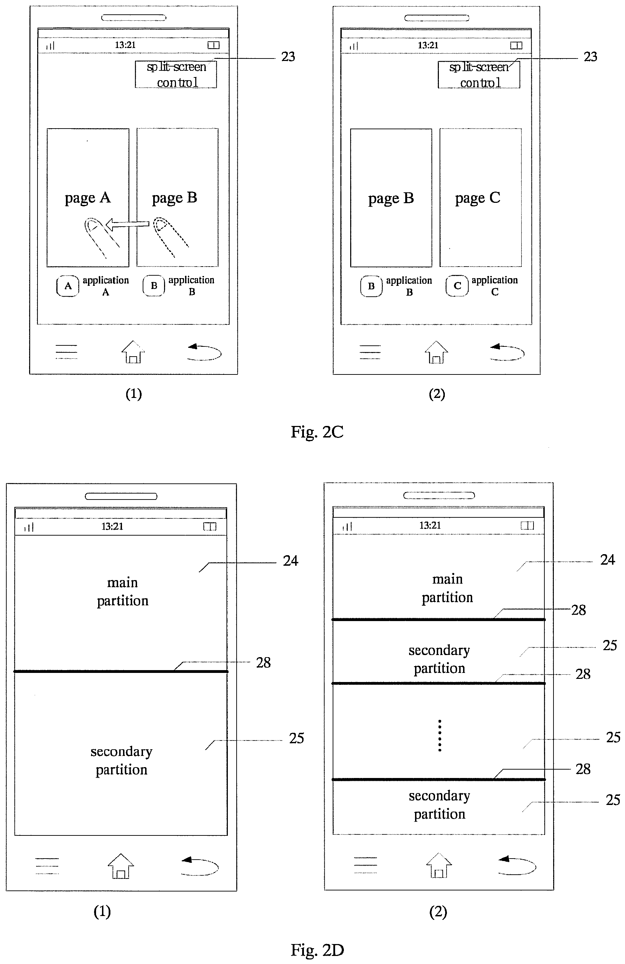

The split-screen control option may be displayed on any location within the multi-task management interface. This embodiment takes a scenario in which the split-screen control option is set at the top right corner of the multi-task management interface as an example for illustrating. As shown in Fig. 2C (1), the split-screen control option 23 is displayed at the top right corner of the multi-task management interface.

Generally, only a finite number of the previewing interfaces may be displayed on the screen of the electronic device. The user may input a preset gesture to trigger more previewing interfaces corresponding respectively to the applications running on the electronic device to exhibit if more previewing interfaces corresponding respectively to the applications running on the electronic device are needed to be viewed. For example, the applications running on the electronic device include application A, application B and application C. as shown in Fig. 2C (1), the previewing interfaces corresponding to the applications are arranged horizontally in a single row. Due to a limitation of the screen's size, application C may be not displayed on the screen. The user may input a right-to-left-slide gesture for triggering to display the previewing interface corresponding to the application C, as shown in Fig. 2C (2).

In step 203, a displaying mode for the multi-task management interface may be switched to a split-screen mode if the split-screen control option is triggered, in which the multi-task management interface in the split-screen mode includes the main partition and the secondary partition.

Generally, the applications running on the electronic device and the split-screen control option are displayed on the multi-task management interface, and the displaying mode for the multi-task management interface may be switched to the split-screen mode if the split-screen control option is triggered, and the multi-task management interface is split into the main partition and the secondary partition.

It should be noted that the multi-task management interface in the split-screen mode includes only one main partition, but may include one or more secondary partitions.

This embodiment takes a scenario in which the multi-task management interface includes only one main partition and one secondary partition as an example for illustrating. Implementations of the scenario in which the multi-task management interface includes one main partition and several secondary partitions may be realized in accordance with means provided by this embodiment.

As shown in Fig. 2D (1), a schematic diagram is provided for illustrating a multi-task management interface including one main partition 24 and one secondary partition 25. As shown in Fig. 2D (2), a schematic diagram is provided for illustrating a multi-task management interface including one main partition 24 and at least two secondary partitions 25.

In step 204, a first application may be displayed on a main partition of the multi-task management interface, in which the first application is one of the applications running on the electronic device.

The main partition may be set in any region of the multi-task management interface. Generally, the main partition may be set in a location of the multi-task management interface near a top of the screen. For example, referring to Fig. 2D (1) again, the main partition 23 of the multi-task management interface is shown at the top of the screen.

Specifically, displaying the first application on the main partition of the multi-task management interface may be realized by followings: acquiring the last application (i.e. an application that is most recently) running in foreground as the first application, and displaying the first application on the main partition of the multi-task management interface.

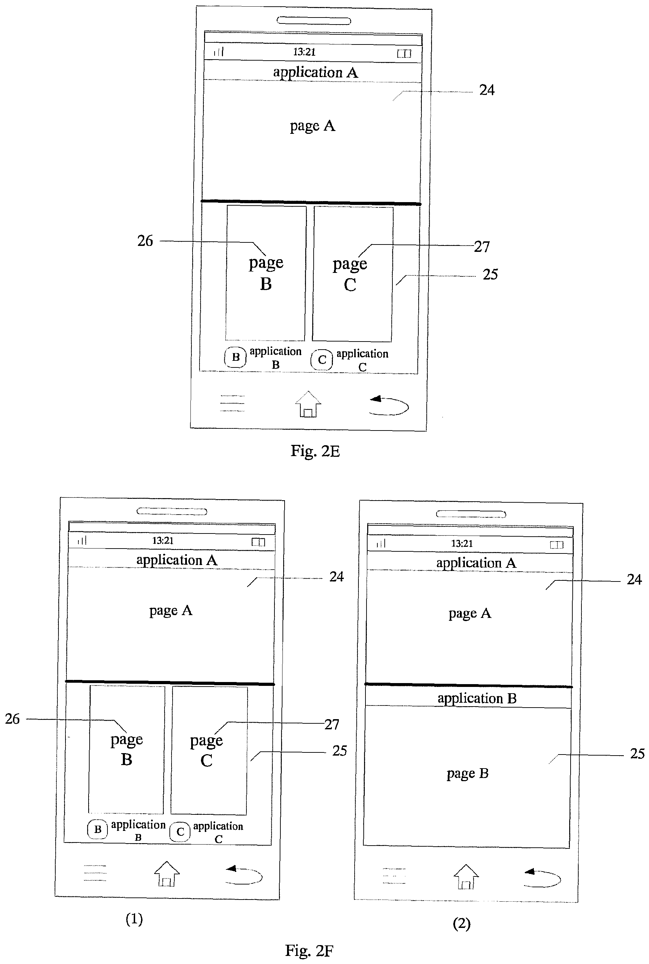

For example, when there is application A running in foreground of the electronic device, the user may trigger the multi-task button on the electronic device to trigger the multi-task management interface to display, and click the split-screen control option provided in the multi-task management interface such that the displaying mode for the multi-task management interface is switched to the split-screen mode. As shown in Fig. 2E, application A is determined as the first application (i.e. the last application running in foreground mentioned above) and thus is displayed on the main partition 24 of the multi-task management interface. Page A exhibited by application A may be the last interface of the application A displayed on the screen of the electronic device before the application A stops running in foreground, or may be a main interface corresponding to the application A.

For example, when there is no application running in foreground of the electronic device, the user may trigger the multi-task button on the electronic device to trigger the multi-task management interface to display, and click the split-screen control option provided in the multi-task management interface such that the displaying mode for the multi-task management interface is switched to the split-screen mode. As shown in Fig. 2E, application A running on the electronic device lately is determined as the first application and thus is displayed on the main partition 24 of the multi-task management interface. Page A exhibited by application A may be the last interface of the application A displayed on the screen of the electronic device before the application A stops running in foreground, or may be a main interface corresponding to the application A.

In step 205, at least one previewing interface corresponding to at least one application other than the last application running in foreground may be displayed on the secondary partition.

Various arrangement modes may be adopted when previewing interfaces corresponding respectively to the applications are displayed. For example, the previewing interfaces corresponding respectively to the applications may be arranged horizontally in a single row according to a second preset order. For another example, the previewing interfaces corresponding respectively to the applications may be arranged horizontally in double rows according to the second preset order. The second order described herein may be an order of opening the applications recently, or may be an order of use frequencies of the applications, which may be determined depending on actual situations and may be not limited in the embodiments of the present invention.

For example, as shown in Fig. 2E, the last application running in foreground may be application A, and the applications running on the electronic device may also include application B and application C besides application A. The previewing interface 26 corresponding to application B and the previewing interface 27 corresponding to application C may be displayed on the secondary partition 25.

Generally, only a finite number of the previewing interfaces may be displayed on the secondary partition. The user may input a preset gesture to trigger more previewing interfaces corresponding respectively to the applications running on the electronic device to exhibit if the user wants to view more previewing interfaces corresponding respectively to the applications running on the electronic device in the secondary partition.

In step 206, a selected previewing interface of the at least one previewing interface displayed on the secondary partition may be acquired, an application corresponding to the selected previewing interface is configured (or determined) as at least one second application, and the at least one second application may be displayed on the secondary partition of the multi-task management interface.

For example, as shown in Fig. 2F (1), page B i.e., the previewing interface 26 corresponding to application B and page C i.e., the previewing interface 27 corresponding to application C may be displayed on the secondary partition 25. The user may click page B i.e., previewing interface 26 corresponding to application B to select the previewing interface 26. As shown in Fig. 2F(2), application B corresponding to the previewing interface 26 may be determined as the second application and may be displayed on the secondary partition 25 of the multi-task management interface with page B the previewing interface exhibited in application B.

It should be noted that the first application displayed on the main partition is running in foreground and may be operated by the user; the second application displayed on the secondary partition is also running in foreground and may also be operated by the user. In other words, the first application displayed on the main partition and the second application displayed on the secondary partition are both running in foreground and the user may operate any application displayed on any one of the main partition and the secondary partition. For example, the user may play games by using a game application displayed on the main partition and may chat with others by using a messaging application displayed on the secondary partition.

In conclusion, according to the split-screen display method provided by embodiments of the present invention, by receiving the operating signal for triggering the multi-task management interface to display, displaying the first application on the main partition of the multi-task management interface and displaying the at least one second application on the secondary partition of the multi-task management interface, in which the first application and the at least one second application are running on the electronic device, i.e., by splitting the multi-task management interface into the main partition and the secondary partition for displaying different applications, a user may be able to use at least two applications at the same time, which may solve a problem that means for displaying the application on the electronic device provided in prior art are unsatisfactory and may improve the user's experience as well.

Additionally, by configuring the last application running in foreground as the first application in default and displaying the first application on the main partition, an operating procedure for acquiring the first application may be simplified and efficiency of split-screen display may be improved.

Additionally, the at least one previewing interface corresponding to at least one application (called a second application) other than the last application running in foreground (called a first application) may be displayed on the secondary partition for the user's selection, and the at least one second application corresponding to the at least one previewing interface the user selects may be displayed on the secondary partition of the multi-task management interface.

Additionally, the multi-task management interface in the split-screen mode is set with a segment control line (or separator) which is movable and is configured to split the multi-task management interface into the main partition and the secondary partition, such that the user may adjust sizes of the main partition and the secondary partition by moving the segment control line.

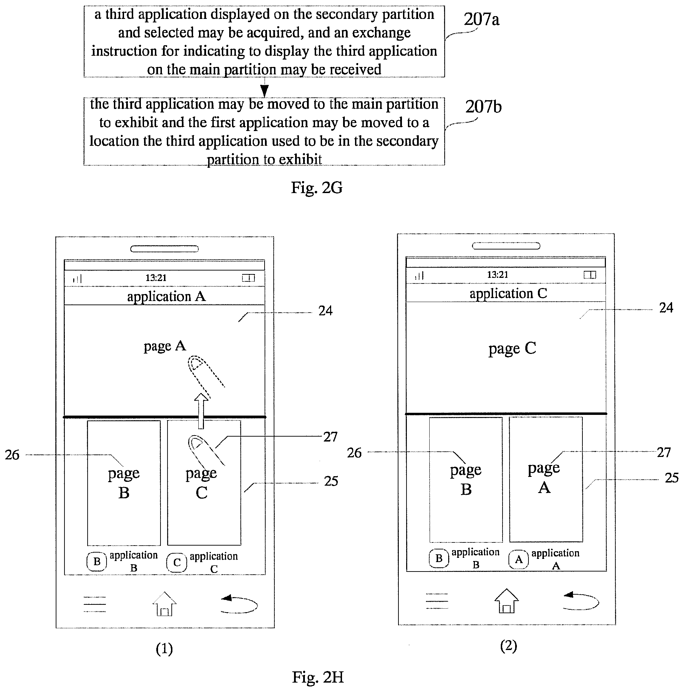

In an example, the user may select a third application from the secondary partition to replace the first application for displaying on the main partition when the first application is displayed on the main partition and at least one application other than the last application running in foreground is displayed on the secondary partition, which may be realized by several steps as shown in Fig. 2G.

In step 207a, a third application displayed on the secondary partition and selected may be acquired, and an exchange instruction for indicating to display the third application on the main partition may be received. In other words, in this step, a previewing interface of a third application displayed on the secondary partition is selected to display (or exchange) the third application on the main partition; the third application is thus acquired; and an exchange instruction indicating to display the third application on the main partition is received.

Various means may be provided for the user to exchange at least one application displayed on the secondary partition to be displayed on the main partition. For example, the at least one application may be selected as the third application (i.e. the application to be exchanged from the secondary partition to the main partition) by long pressing the previewing interface corresponding to the at least one application, or by inputting a preset gesture on the previewing interface corresponding to the at least one application. Generally, the exchange instruction described herein is the preset gesture the user inputs.

In step 207b, the third application may be moved to the main partition to be exhibited and the first application may be moved to a location the third application used to be in the secondary partition to be exhibited.

For example, as shown in Fig. 2H (1), the first application i.e., application A is displayed on the main partition 24, and the previewing interface 26 i.e., page B corresponding to application B running on the electronic device and the previewing interface 27 i.e., page C corresponding to application C may be displayed on the secondary partition. The user may select application C as the third application by long pressing the previewing interface 27 i.e., page C, and the user may input an up-slide gesture as the exchange instruction for instructing to display application C on the main partition. As shown in Fig. 2H (2), application C may be determined as the third application and may be moved to the main partition 24 to be exhibited, and the first application i.e., application A may be moved to a location the third application used to be in the secondary partition 25 to be exhibited.

In an example, the multi-task management interface in the split-screen mode is set with a segment control line which is movable and is configured to split the multi-task management interface into the main partition and the secondary partition. Referring to Fig. 2D again, the multi-task management interface is set with the segment control line 28 which is movable, such that the user may adjust sizes of the main partition and the secondary partition by moving the segment control line 28.

In an example, the main partition or the secondary partition includes a multifunctional virtual button for displaying a menu including at least one of a split-screen exit control option, an exchange control option and a group of switching control options.

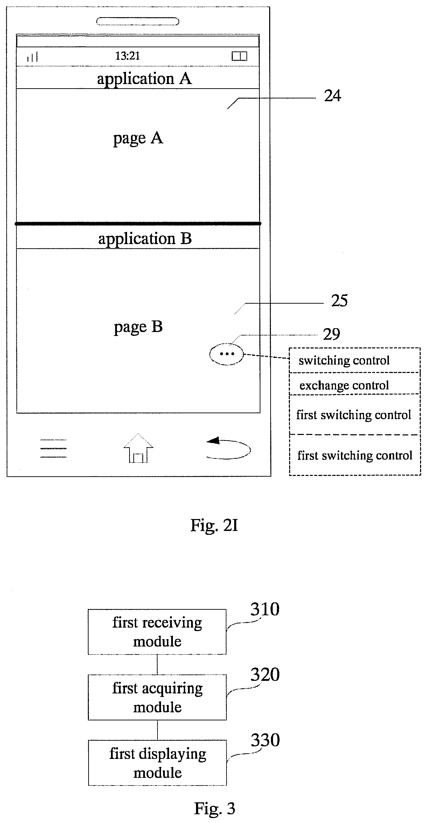

For example, as shown in Fig. 2I, the secondary partition 25 includes a multifunctional virtual button 29, such that at least one of the split-screen exit control option, the exchange control option and the group of the switching control options may be displayed if the multifunctional virtual button is triggered. The switching control options described herein may include a first switching control option and a second switching control option.

The multi-task management interface may be controlled to exit the split-screen mode if the split-screen exit control option displayed is triggered. The multi-task management interface including the applications running on the electronic device and the split-screen control option may be displayed normally and the first application displayed on the main partition may run (i.e., be displayed) in foreground after the multi-task management interface exits the split-screen mode, which may be not limited in this embodiment and may be determined depending on actual situations.

The main partition and the secondary partition may be controlled to exchange the applications displayed thereon if the exhibited exchange control option is triggered. For example, application A may be displayed on the main partition and application B may be displayed on the secondary partition. Application A may be displayed on the secondary partition and application B may be displayed on the main partition if the exchange control option is triggered.

The group of switching control options includes a first switching control option for switching the application displayed on the main partition and a second switching control option for switching the application displayed on the secondary partition, the application running on the electronic device other than the first application is displayed on the main partition if the first switching control option is triggered; and the application running on the electronic device other than the second application is displayed on the secondary partition if the second switching control option is triggered.

The application displayed on the main partition or the secondary partition may be switched to another application according to a preset order. The preset order may be an order of opening the applications recently, or may be an order of use frequencies of the applications, which may be determined depending on actual situations and may be not limited in the embodiments of the present invention.

It should be noted that this embodiment only takes a scenario that the multifunctional virtual button is provided on the secondary partition as an example. Implementation of a scenario that the multifunctional virtual button is provided on the main partition is similar to the implementation of a scenario that the multifunctional virtual button is provided on the secondary partition, which is not described herein.

Embodiments of the present invention also provide a split-screen display apparatus for implementing the split-screen display method as follows. Regarding details which are not disclosed in the embodiments of the split-screen display apparatus, reference may be made to the embodiments of the split-screen display method.

Fig. 3 is a block diagram illustrating a split-screen display apparatus according to an example embodiment of the present invention. The split-screen display apparatus is applied to an electronic device including a touch screen, which includes: a first receiving module 310, a first acquiring module 320 and a first displaying module 330.

The first receiving module 310 is configured to receive an operating signal for triggering a multi-task management interface to display.

The first acquiring module 320 is configured to acquire applications running on the electronic device.

The first displaying module 330 is configured to display a first application on a main partition of the multi-task management interface and to display at least one second application on a secondary partition of the multi-task management interface, in which the first application and the at least one second application are running on the electronic device.

In conclusion, according to the split-screen display apparatus provided by embodiments of the present invention, by receiving the operating signal for triggering the multi-task management interface to display, displaying the first application on the main partition of the multi-task management interface and displaying the at least one second application on the secondary partition of the multi-task management interface, in which the first application and the at least one second application are running on the electronic device, i.e., by splitting the multi-task management interface into the main partition and the secondary partition for displaying different applications, a user may be able to use at least two applications at the same time, which may solve a problem that means for displaying the application on the electronic device provided in prior art are unsatisfactory and may improve the user's experience as well.

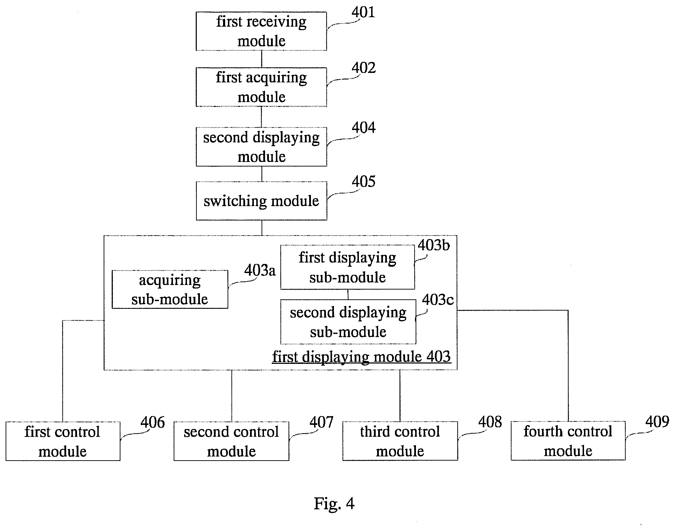

Fig. 4 is a block diagram illustrating a split-screen display apparatus according to another example embodiment of the present invention. The split-screen display apparatus is applied to an electronic device including a touch screen, which includes: a first receiving module 401, a first acquiring module 402 and a first displaying module 403.

The first receiving module 401 is configured to receive an operating signal for triggering a multi-task management interface to display.

The operating signal described herein may be generated when a certain physical button on the electronic device is triggered, or may be a gesture input by the user on the touch screen of the electronic device, or may be generated when the electronic device is shaken following a preset track. The operating signal may be not limited in the embodiments of the present invention and may be determined depending on actual situations.

Generally, the multi-task management interface is configured to display applications running on the electronic device, and each of the applications displayed on the multi-task management interface may be displayed in a form of a previewing interface corresponding to the application. The previewing interface described herein may be the last interface of the application displayed on a screen of the electronic device before the application stops running in foreground. In an example, the previewing interface of the application may be a main interface corresponding to the application.

The first acquiring module 402 is configured to acquire applications running on the electronic device.

The first displaying module 403 is configured to display a first application on a main partition of the multi-task management interface and to display at least one second application on a secondary partition of the multi-task management interface, in which the first application and the at least one second application are running on the electronic device.

Each of the applications may be displayed in the form of the previewing interface corresponding to the application when the applications running on the electronic device are displayed on the multi-task management interface.

Specifically, various arrangement modes may be adopted when previewing interfaces corresponding respectively to the applications are displayed. For example, the previewing interfaces corresponding respectively to the applications may be arranged horizontally in a single row according to a first preset order. For another example, the previewing interfaces corresponding respectively to the applications may be arranged horizontally in double rows according to the first preset order. The first preset order described herein may be an order of opening the applications recently, or may be an order of use frequencies of the applications, which may be determined depending on actual situations and may be not limited in the embodiments of the present invention.

It should be noted that the first application displayed on the main partition is running in foreground and may be operated by the user; the second application displayed on the secondary partition is also running in foreground and may also be operated by the user. In other words, the first application displayed on the main partition and the second application displayed on the secondary partition are both running in foreground and the user may operate any application displayed on any one of the main partition and the secondary partition. For example, the user may play games by using a game application displayed on the main partition and may chat with others by using a messaging application displayed on the secondary partition.

In an example, the first displaying module 403 includes: an acquiring sub-module 403a, a first displaying sub-module 403b, and a second displaying sub-module 403c.

The acquiring sub-module 403a is configured to acquire the last application running in foreground as the first application, and to display the first application on the main partition of the multi-task management interface.

The main partition may be set in any region of the multi-task management interface. Generally, the main partition may be set in a location of the multi-task management interface near a top of the screen.

The first displaying sub-module 403b is configured to display at least one previewing interface corresponding to at least one application other than the last application running in foreground on the secondary partition.

Various arrangement modes may be adopted when previewing interfaces corresponding respectively to the applications are displayed. For example, the previewing interfaces corresponding respectively to the applications may be arranged horizontally in a single row according to a second preset order. For another example, the previewing interfaces corresponding respectively to the applications may be arranged horizontally in double rows according to the second preset order. The second order described herein may be an order of opening the applications recently, or may be an order of use frequencies of the applications, which may be determined depending on actual situations and may be not limited in the embodiments of the present invention.

Generally, only a finite number of the previewing interfaces may be displayed on the secondary partition. The user may input a preset gesture to trigger more previewing interfaces corresponding respectively to the applications running on the electronic device to exhibit if the user wants to view more previewing interfaces corresponding respectively to the applications running on the electronic device in the secondary partition.

The second displaying sub-module 403c is configured to acquire a selected previewing interface of the at least one previewing interface displayed on the secondary partition, to configure an application corresponding to the selected previewing interface as the at least one second application, and to display the at least one second application on the secondary partition of the multi-task management interface.

In an example, the split-screen display apparatus includes: a second acquiring module, a second receiving module, and an exhibiting module.

The second acquiring module is configured to acquire a third application displayed on the secondary partition and selected.

The second receiving module is configured to receive an exchange instruction for indicating to display the third application on the main partition.

Various means may be provided for the user to select the at least one application displayed on the secondary partition. For example, the at least one application may be selected as the third application by long pressing the previewing interface corresponding to the at least one application, or by inputting a preset gesture on the previewing interface corresponding to the at least one application. Generally, the exchange instruction described herein is the preset gesture the user inputs.

The exhibiting module is configured to move the third application to the main partition to exhibit and to move the first application to a location the third application used to be in the secondary partition to exhibit.

In an example, the split-screen display apparatus includes: a second displaying module 404, and a switching module 405.

The second displaying module 404 is configured to display the applications running on the electronic device and a split-screen control option on the multi-task management interface.

The split-screen control option may be displayed on any location within the multi-task management interface. This embodiment takes a scenario in which the split-screen control option is set at the top right corner of the multi-task management interface as an example for illustrating.

Generally, only a finite number of the previewing interfaces may be displayed on the screen of the electronic device. The user may input a preset gesture to trigger more previewing interfaces corresponding respectively to the applications running on the electronic device to exhibit if more previewing interfaces corresponding respectively to the applications running on the electronic device are needed to be viewed.

The switching module 405 is configured to switch from a displaying mode for the multi-task management interface to a split-screen mode if the split-screen control option is triggered, in which the multi-task management interface in the split-screen mode includes the main partition and the secondary partition.

Generally, the applications running on the electronic device and the split-screen control option are displayed on the multi-task management interface, and the displaying mode for the multi-task management interface may be switched to the split-screen mode if the split-screen control option is triggered, and the multi-task management interface is split into the main partition and the secondary partition.

It should be noted that the multi-task management interface in the split-screen mode includes only one main partition, but may include one or more secondary partitions. This embodiment takes a scenario in which the multi-task management interface includes only one main partition and one secondary partition as an example for illustrating. Implementations of the scenario in which the multi-task management interface includes one main partition and several secondary partitions may be realized in accordance with means provided by this embodiment.

In an example, the multi-task management interface in the split-screen mode is set with a segment control line which is movable and is configured to split the multi-task management interface into the main partition and the secondary partition.

In an example, the main partition or the secondary partition includes a multifunctional virtual button for introducing to display at least one of a split-screen exit control option, an exchange control option and a group of switching control options, and the split-screen display apparatus further includes: a first control module 406, a second control module 407, a third control module 408, and a fourth control module 409.

The first control module 406 is configured to control the multi-task management interface to exit the split-screen mode if the split-screen exit control option is triggered.

The multi-task management interface may be controlled to exit the split-screen mode if the split-screen exit control option displayed is triggered. The multi-task management interface including the applications running on the electronic device and the split-screen control option may be displayed normally and the first application displayed on the main partition may run (i.e., be displayed) in foreground after the multi-task management interface exits the split-screen mode, which may be not limited in this embodiment and may be determined depending on actual situations.

The second control module 407 is configured to control to exchange the application displayed on the main partition with the application displayed on the secondary partition if the exchange control option is triggered.

The group of switching control options includes a first switching control option for switching the application displayed on the main partition and a second switching control option for switching the application displayed on the secondary partition.

The third control module 408 is configured to control the application running on the electronic device other than the first application to display on the main partition if the first switching control option is triggered.

The fourth control module 409 is configured to control the application running on the electronic device other than the second application to display on the secondary partition if the second switching control option is triggered.

It should be noted that this embodiment only takes a scenario that the multifunctional virtual button is provided on the secondary partition as an example. Implementation of a scenario that the multifunctional virtual button is provided on the main partition is similar to the implementation of a scenario that the multifunctional virtual button is provided on the secondary partition, which is not described herein.

In conclusion, according to the split-screen display apparatus provided by embodiments of the present invention, by receiving the operating signal for triggering the multi-task management interface to display, displaying the first application on the main partition of the multi-task management interface and displaying the at least one second application on the secondary partition of the multi-task management interface, in which the first application and the at least one second application are running on the electronic device, i.e., by splitting the multi-task management interface into the main partition and the secondary partition for displaying different applications, a user may be able to use at least two applications at the same time, which may solve a problem that means for displaying the application on the electronic device provided in prior art are unsatisfactory and may improve the user's experience as well.

Additionally, by configuring the last application running in foreground as the first application in default and displaying the first application on the main partition, an operating procedure for acquiring the first application may be simplified and efficiency of split-screen display may be improved.

Additionally, the at least one previewing interface corresponding to at least one application other than the last application running in foreground may be displayed on the secondary partition for the user's selection, and the at least one second application corresponding to the at least one previewing interface the user selects may be displayed on the secondary partition of the multi-task management interface.

Additionally, the multi-task management interface in the split-screen mode is set with a segment control line which is movable and is configured to split the multi-task management interface into the main partition and the secondary partition, such that the user may adjust sizes of the main partition and the secondary partition by moving the segment control line.

Additionally, by providing the split-screen exit control option, the user may be able to control the multi-task management interface to exit the split-screen mode by triggering the split-screen exit control option; and by providing the exchange control option and the group of switching control options, the user may be able to switch the application displayed on the secondary partition and the application displayed on the main partition by using the exchange control option and the group of switching control options.

Embodiments of the present invention provide a split-screen display device applied to an electronic device is provided, which includes: a processor; and a memory configured to store an instruction executable by the processor, in which the processor is configured to: receive an operating signal for triggering a multi-task management interface to display; acquire applications running on the electronic device; and display a first application on a main partition of the multi-task management interface and display at least one second application on a secondary partition of the multi-task management interface, in which the first application and the at least one second application are running on the electronic device.

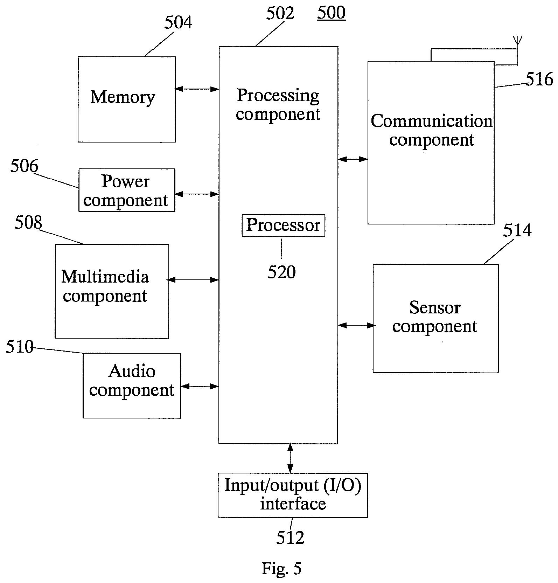

Fig. 5 is a block diagram illustrating a split-screen display device according to an example embodiment of the present invention. For example, the split-screen display device 500 may be a mobile phone, a computer, a digital broadcasting terminal, a message sending and receiving equipment, a game controller, a tablet device, a medical device, a fitness equipment, a personal digital assistant or the like.

Referring to Fig. 5, the split-screen display device 500 may include one or more of the following components: a processing component 502, a memory 504, a power component 506, a multimedia component 508, an audio component 510, an input/output (I/O) interface 512, a sensor component 514, and a communication component 516.

The processing component 502 typically controls overall operations of the split-screen display device 500, such as the operations associated with display, telephone calls, data communications, camera operations, and recording operations. The processing component 502 may include one or more processors 520 to execute instructions to perform all or part of the steps in the above described methods. Moreover, the processing component 502 may include one or more modules which facilitate the interaction between the processing component 502 and other components. For instance, the processing component 502 may include a multimedia module to facilitate the interaction between the multimedia component 508 and the processing component 502.

The memory 504 is configured to store various types of data to support the operation of the split-screen display device 500. Examples of such data include instructions for any applications or methods operated on the split-screen display device 500, contact data, phonebook data, messages, pictures, video, etc. The memory 504 may be implemented using any type of volatile or non-volatile memory devices, or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic or optical disk.

The power component 506 provides power to various components of the split-screen display device 500. The power component 506 may include a power management system, one or more power sources, and any other components associated with the generation, management, and distribution of power in the split-screen display device 500.

The multimedia component 508 includes a screen providing an output interface between the split-screen display device 500 and the user. In some embodiments, the screen may include a liquid crystal display (LCD) and a touch panel (TP). If the screen includes the touch panel, the screen may be implemented as a touch screen to receive input signals from the user. The touch panel includes one or more touch sensors to sense touches, swipes, and gestures on the touch panel. The touch sensors may not only sense a boundary of a touch or swipe action, but also sense a period of time and a pressure associated with the touch or swipe action. In some embodiments, the multimedia component 508 includes a front camera and/or a rear camera. The front camera and the rear camera may receive an external multimedia datum while the split-screen display device 500 is in an operation mode, such as a photographing mode or a video mode. Each of the front camera and the rear camera may be a fixed optical lens system or have focus and optical zoom capability.

The audio component 510 is configured to output and/or input audio signals. For example, the audio component 510 includes a microphone ("MIC") configured to receive an external audio signal when the split-screen display device 500 is in an operation mode, such as a call mode, a recording mode, and a voice recognition mode. The received audio signal may be further stored in the memory 504 or transmitted via the communication component 516. In some embodiments, the audio component 510 further includes a speaker to output audio signals.

The I/O interface 512 provides an interface between the processing component 502 and peripheral interface modules, such as a keyboard, a click wheel, buttons, and the like. The buttons may include, but are not limited to, a home button, a volume button, a starting button, and a locking button.

The sensor component 514 includes one or more sensors to provide status assessments of various aspects of the split-screen display device 500. For instance, the sensor component 514 may detect an open/closed status of the split-screen display device 500, relative positioning of components, e.g., the display and the keypad, of the split-screen display device 500, a change in position of the split-screen display device 500 or a component of the split-screen display device 500, a presence or absence of user contact with the split-screen display device 500, an orientation or an acceleration/deceleration of the split-screen display device 500, and a change in temperature of the split-screen display device 500. The sensor component 514 may include a proximity sensor configured to detect the presence of nearby objects without any physical contact. The sensor component 514 may also include a light sensor, such as a CMOS or CCD image sensor, for use in imaging applications. In some embodiments, the sensor component 514 may also include an accelerometer sensor, a gyroscope sensor, a magnetic sensor, a pressure sensor, or a temperature sensor.

The communication component 516 is configured to facilitate communication, wired or wirelessly, between the split-screen display device 500 and other devices. The split-screen display device 500 can access a wireless network based on a communication standard, such as WiFi, 2G, or 3G, or a combination thereof. In one exemplary embodiment, the communication component 516 receives a broadcast signal or broadcast associated information from an external broadcast management system via a broadcast channel. In one exemplary embodiment, the communication component 516 further includes a near field communication (NFC) module to facilitate short-range communications. For example, the NFC module may be implemented based on a radio frequency identification (RFID) technology, an infrared data association (IrDA) technology, an ultra-wideband (UWB) technology, a Bluetooth (BT) technology, and other technologies.

In exemplary embodiments, the split-screen display device 500 may be implemented with one or more application specific integrated circuits (ASICs), digital signal processors (DSPs), digital signal processing devices (DSPDs), programmable logic devices (PLDs), field programmable gate arrays (FPGAs), controllers, micro-controllers, microprocessors, or other electronic components, for performing the split-screen display method described above.

In exemplary embodiments, there is also provided a non-transitory computer-readable storage medium including instructions, such as included in the memory 504, executable by the processor 520 in the split-screen display device 500, for performing the above-described methods. For example, the non-transitory computer-readable storage medium may be a ROM, a RAM, a CD-ROM, a magnetic tape, a floppy disc, an optical data storage device, and the like.

A non-transitory computer-readable storage medium has stored therein instructions that, when executed by a processor of a split-screen display device 500, causes the split-screen display device 500 to perform methods illustrated in Fig. 1, Fig. 2A and Fig. 2G.

Other embodiments of the present invention will be apparent to those skilled in the art from consideration of the specification and practice of the invention disclosed here. This application is intended to cover any variations, uses, or adaptations of the invention following the general principles thereof and including such departures from the present invention as come within known or customary practice in the art.

## Claims

1. A split-screen display method applied to an electronic device, comprising:
receiving (101, 201) an operating signal for triggering a multi-task management interface to display;
acquiring (102) applications running on the electronic device; and
displaying (103) a first application (A) on a main partition (24) of the multi-task management interface and displaying at least one second application (B) on a secondary partition (25) of the multi-task management interface, wherein the first application (A) and the at least one second application (B) are running on the electronic device.

2. The split-screen display method according to claim 1, wherein displaying (103) a first application (A) on a main partition (24) of the multi-task management interface comprises:
acquiring the last application running in foreground as the first application (A), and displaying the first application (A) on the main partition (24) of the multi-task management interface.

3. The split-screen display method according to claim 1 or 2, wherein displaying (103) at least one second application (B) on a secondary partition (25) of the multi-task management interface comprises:
displaying (205) at least one previewing interface (26, 27) corresponding to at least one application (B, C) other than the last application running in foreground on the secondary partition (25); and
acquiring (206) a selected previewing interface (26) of the at least one previewing interface (26, 27) displayed on the secondary partition (25), configuring an application (B) corresponding to the selected previewing interface (26) as at least one second application, and displaying the at least one second application (B) on the secondary partition (25) of the multi-task management interface.

4. The split-screen display method according to any of claims 1-3, further comprising:
acquiring (207a) a third application (C) displayed on the secondary partition (25) and selected;
receiving (207a) an exchange instruction for indicating to display the third application (C) on the main partition (24); and
moving (207b) the third application (C) to the main partition (24) to exhibit and moving the first application (A) to a location the third application (C) used to be in the secondary partition (25) to exhibit.

5. The split-screen display method according to any of claims 1-4, further comprising:
displaying (202) the applications running on the electronic device and a split-screen control option (23) on the multi-task management interface; and
switching (203) from a displaying mode for the multi-task management interface to a split-screen mode if the split-screen control option (23) is triggered, wherein the multi-task management interface in the split-screen mode comprises the main partition (24) and the secondary partition (25).

6. The split-screen display method according to any of claims 1-5, wherein the multi-task management interface in the split-screen mode is set with a segment control line (28) which is movable and is configured to split the multi-task management interface into the main partition (24) and the secondary partition (25).

7. The split-screen display method according to any of claims 1-6, wherein the main partition (24) or the secondary partition (25) comprises a multifunctional virtual button (29) for introducing to display at least one of a split-screen exit control option, an exchange control option and a group of switching control options, and the split-screen display method comprises:
controlling the multi-task management interface to exit the split-screen mode if the split-screen exit control option is triggered;
controlling to exchange the application displayed on the main partition (24) with the application displayed on the secondary partition (25) if the exchange control option is triggered; and
wherein the group of switching control options comprises a first switching control option for switching the application displayed on the main partition (24) and a second switching control option for switching the application displayed on the secondary partition (25), the split-screen display method further comprises: displaying the application running on the electronic device other than the first application (A) on the main partition (24) if the first switching control option is triggered; and displaying the application running on the electronic device other than the at least one second application (B) on the secondary partition (25) if the second switching control option is triggered.

8. A split-screen display apparatus applied to an electronic device, comprising:
a first receiving module (310, 401), configured to receive an operating signal for triggering a multi-task management interface to display;
a first acquiring module (320, 402), configured to acquire applications running on the electronic device; and
a first displaying module (330, 403), configured to display a first application (A) on a main partition (24) of the multi-task management interface and to display at least one second application (B) on a secondary partition of the multi-task management interface, wherein the first application (A) and the at least one second application (B) are running on the electronic device.

9. The split-screen display apparatus according to claim 8, wherein the first displaying module (330, 403) comprises:
an acquiring sub-module (403a), configured to acquire the last application running in foreground as the first application (A), and to display the first application (A) on the main partition (24) of the multi-task management interface.

10. The split-screen display apparatus according to claim 8 or 9, wherein the first displaying module (330, 403) further comprises:
a first displaying sub-module (403b), configured to display at least one previewing interface (26, 27) corresponding to at least one application (B, C) other than the last application running in foreground on the secondary partition (25); and
a second displaying sub-module (403c), configured to acquire a selected previewing interface (25) of the at least one previewing interface (26, 27) displayed on the secondary partition (25), to configure an application (B) corresponding to the selected previewing interface (26) as one of the at least one second application (B), and to display the one of the at least one second application (B) on the secondary partition (25) of the multi-task management interface.

11. The split-screen display apparatus according to any of claims 8-10, further comprising:
a second acquiring module, configured to acquire a third application (C) displayed on the secondary partition (25) and selected;
a second receiving module, configured to receive an exchange instruction for indicating to display the third application (C) on the main partition (24); and
an exhibiting module, configured to move the third application (C) to the main partition (24) to exhibit and to move the first application (A) to a location the third application (C) used to be in the secondary partition (25) to exhibit.

12. The split-screen display apparatus according to any of claims 8-11, further comprising:
a second displaying module (404), configured to display the applications running on the electronic device and a split-screen control option (23) on the multi-task management interface; and
a switching module (405), configured to switch from a displaying mode for the multi-task management interface to a split-screen mode if the split-screen control option (23) is triggered, wherein the multi-task management interface in the split-screen mode comprises the main partition (24) and the secondary partition (25).

13. The split-screen display apparatus according to any of claims 8-12, wherein the multi-task management interface in the split-screen mode is set with a segment control line (28) which is movable and is configured to split the multi-task management interface into the main partition (24) and the secondary partition (25).

14. The split-screen display apparatus according to any of claims 8-13, wherein the main partition (24) or the secondary partition (25) comprises a multifunctional virtual button (29) for introducing to display at least one of a split-screen exit control option, an exchange control option and a group of switching control options, and the split-screen display apparatus further comprises:
a first control module (406), configured to control the multi-task management interface to exit the split-screen mode if the split-screen exit control option is triggered;
a second control module (407), configured to control to exchange the application displayed on the main partition (24) with the application displayed on the secondary partition (25) if the exchange control option is triggered; and
wherein the group of switching control options comprises a first switching control option for switching the application displayed on the main partition (24) and a second switching control option for switching the application displayed on the secondary partition (25), the split-screen display apparatus comprises:
a third control module (408), configured to control the application running on the electronic device other than the first application (A) to display on the main partition (24) if the first switching control option is triggered; and
a fourth control module (409), configured to control the application running on the electronic device other than the at least one second application (B) to display on the secondary partition (25) if the second switching control option is triggered.

15. A computer program including instructions for executing the steps of a split-screen display method according to any one of claims 1 to 7 when said program is executed by a computer.
